(19) Europäisches Patentamt
European Patent Office
Office européen des brevets

(11) **EP 4 474 196 A1**

(12) **EUROPEAN PATENT APPLICATION**
published in accordance with Art. 153(4) EPC

(43) Date of publication:
**11.12.2024 Bulletin 2024/50**

(21) Application number: **22924111.2**

(22) Date of filing: **06.12.2022**

(51) International Patent Classification (IPC):
**B60L 3/04** *(2006.01)* **B60L 7/14** *(2006.01)*
**B60L 15/20** *(2006.01)*

(52) Cooperative Patent Classification (CPC):
**B60L 3/04; B60L 7/14; B60L 15/20;** Y02T 10/72

(86) International application number:
**PCT/JP2022/044806**

(87) International publication number:
**WO 2023/145259 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.01.2022 JP 2022013304**

(71) Applicant: **DENSO CORPORATION**
**Kariya-city, Aichi 448-8661 (JP)**

(72) Inventors:
• **KAMIO, Shigeru**
  **Kariya- city, Aichi 4488661 (JP)**
• **LIU, Haibo**
  **Kariya- city, Aichi 4488661 (JP)**
• **KAWAI, Keisuke**
  **Kariya- city, Aichi 4488661 (JP)**

(74) Representative: **TBK**
**Bavariaring 4-6**
**80336 München (DE)**

(54) **MOVING BODY CONTROL SYSTEM AND PROGRAM**

(57) The control system has a motion control unit and a stopping failsafe control unit. The motion control unit executes a first torque control when a traveling speed of the mobile object exceeds a predetermined speed and executes a second torque control when the traveling speed of the mobile object is below the predetermined speed. The second torque control is a control to change the output torque of the motor from the instructed torque command value to the stop torque command value along the torque waveform progressively. The stopping failsafe control unit determines whether an abnormality has occurred in the motor based on a comparison between an output torque of the motor when the second torque control is executed and a predetermined abnormality determination value and executes a first failsafe control of the motor when it is determined that the motor is abnormal.

FIG.2

**Description**

[CROSS-REFERENCING OF RELATED APPLICATIONS]

This application claims priority to Japanese Patent Application No. 2022-013304, filed on January 31, 2022. The contents of these applications are incorporated herein by reference in their entirety.

[TECHNICAL FIELD]

This disclosure relates to a control system for a mobile object and a program.

[BACKGROUND ART]

Conventionally, there are vehicles such as electric vehicles that are equipped with a motor as a drive source for driving. The motor used in this type of vehicle is called a motor generator, which can perform both driving and regenerative operations. In this type of vehicle, the regenerative operation of the motor generates a braking force on the vehicle, which allows the vehicle to decelerate. The control device described in Patent Document 1 below is installed in a vehicle equipped with a motor and adjusts the braking force of the vehicle by adjusting an amount of regeneration of the motor.

[PRIOR ART REFERENCES]

[PATENT DOCUMENT]

[Patent Document 1] JP2013-158178A

[SUMMARY OF INVENTION]

Generally, the magnitude of the braking force generated by the regenerative operation of the motor is set according to an amount of brake operation by a driver. However, when a braking force corresponding to the amount of brake operation is continuously generated when the vehicle stops, the vehicle may vibrate significantly in a longitudinal direction, i.e., in a pitch direction, after the vehicle has stopped. This is caused by the torsion of the drive shaft and other components in the power transmission system for transmitting the motor torque to the wheels, which is released when the vehicle stops. In a case that the vehicle vibrates in the pitch direction when it stops, there is concern that occupants may feel discomfort.

One example of a countermeasure to such a problem is to reduce the degree of motor regeneration as the vehicle speed decreases shortly before the vehicle stops, as described in Patent Document 1 above, for example. However, it is difficult to suppress the vibration of the vehicle in the pitch direction when the vehicle stops simply by limiting an amount of regeneration according to the vehicle speed. For example, when braking is initiated at low speeds, the vehicle speed decreases abruptly, making it difficult to change the amount of regeneration to follow the change, and as a result, it may not be possible to suppress the pitch-directional vibration of the vehicle when it stops. In addition, depending on the method of adjusting the braking force generated by the motor, there is a possibility of giving the occupants an uncomfortable feeling of so-called "G-out," in which they may feel that the vehicle's deceleration is not as effective as it should be. Thus, there is still room for further improvement in the method of stopping the vehicle using the braking force of the motor.

The purpose of the present disclosure is to provide a control system for a mobile object and a program that can more appropriately stop the mobile object and ensure safety.

The control system for a mobile object according to an aspect of the present disclosure is a control system (40) for a mobile object (100) in which a motor (140) is mounted as a drive source for traveling. The system includes: a first torque command value setting unit (11) that sets an instructed torque command value, which is a target value of torque to be output from the motor based on a driver's operation on the mobile object, a second torque command value setting unit (12) that sets a stop torque command value, which is a target value of the torque to be output from the motor to maintain the stopped state of the mobile object when the mobile object has been stopped, a waveform setting unit (13) that sets a torque waveform defining a time variation of a target value of an output torque of the motor, a motion control unit (14) that executes a first torque control when a travelling speed of the mobile object exceeds a predetermined speed and executes a second torque control when the traveling speed of the mobile object is equal to or below the predetermined speed, the first torque control being controlling the output torque of the motor based on the instructed torque command value and the second torque control being a control to change the output torque of the motor from the instructed torque command value to the stop torque command value along the torque waveform progressively, a stopping failsafe control unit (17) that determines whether an abnormality has occurred in the motor based on a comparison of the output torque of the motor when the second torque control is executed and a predetermined abnormality determination value, and when determining that the abnormality has occurred, executes a first failsafe control of the motor.

The program according to one other aspect of the present disclosure is a program causing at least one processing unit (10) to: set an instructed torque command value, which is a target value of torque to be output from the motor based on a driver's operation on the mobile object, set a stop torque command value, which is a target value of the torque to be output from the motor to maintain the stopped state of the mobile object when the mobile object has been stopped, set a torque waveform defining a time variation of a target value of an output torque of the motor, execute a first torque control when a travelling speed of the mobile object exceeds a predetermined speed and executes a second torque control when the traveling speed of the mobile object is equal to or below the predetermined speed, the first torque control being controlling the output torque of the motor based on the instructed torque command value and the second torque control being a control to change the output torque of the motor from the instructed torque command value to the stop torque command value along the torque waveform progressively, determine whether an abnormality has occurred in the motor based on a comparison of the output torque of the motor when the second torque control is executed and a predetermined abnormality determination value, and when determining that the abnormality has occurred, execute a first failsafe control of the motor.

According to the above configuration and program, execution of the second torque control causes the output torque of the motor to vary along the torque waveform from the instructed torque command value to the stop torque command value. This change in the motor's output torque along the torque waveform makes it possible to more appropriately stop the mobile object. In addition, when the motor is determined to have an abnormality by comparing the output torque of the motor when the second torque control is executed with the predetermined abnormality determination value, the first failsafe control of the motor is executed, thereby it is possible to ensure a safety of the mobile object.

[Brief description of the drawing].

Fig. 1 is a block diagram showing the schematic structure of the vehicle.
Fig. 2 is a block diagram showing the electrical configuration of the vehicle.
Fig. 3 is a timing chart showing the transition of vehicle speed and motor output torque in the reference example vehicle.
Fig. 4 is a timing chart showing the transition of vehicle speed and motor output torque in the vehicle of the embodiment.
Fig. 5 is a flowchart showing the process performed by the control unit of the embodiment.
Fig. 6 is a flowchart showing the process performed by the control unit of the implementation.
Fig. 7 is a flowchart showing the steps of the process executed by the control unit of the implementation.
Fig. 8 is a map showing the relationship between the estimated gradient of the road surface and the gradient-driven torque used by the controller.
Fig. 9 is a timing chart showing the vehicle speed, brake pedal depression, and motor output torque in this vehicle.

[DESCRIPTION OF EMBODIMENTS]

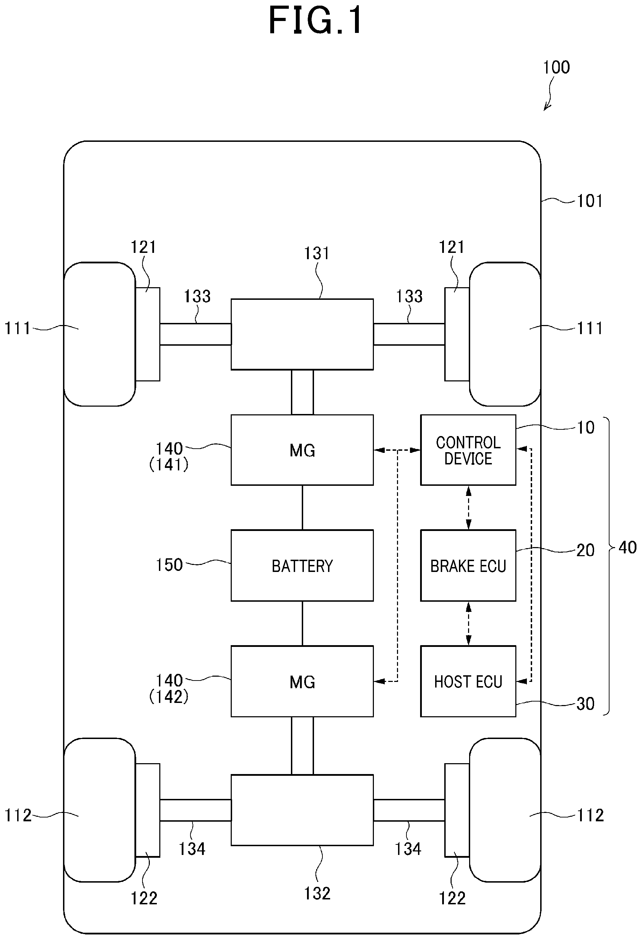

The following is a description of this embodiment with reference to the accompanying drawings. For ease of understanding, identical components are indicated with the same symbols as far as possible in each drawing, and redundant explanations are omitted. First, a schematic configuration of the vehicle in which the control device is mounted will be described. As shown in Figure 1, a vehicle 100 includes a body 101, wheels 111 and 112, motors 141 and 142, and a battery 150. In this embodiment, the vehicle 100 corresponds to the "mobile object".

The vehicle body 101 is the body portion of the vehicle 100 and is generally referred to as the "body". The wheels 111 are a pair of wheels provided on the front side portion of the vehicle body 101, and the wheels 112 are a pair of wheels provided on the rear side portion of the vehicle body 101. Thus, a total of four wheels are provided on the vehicle 100. The vehicle 100 is a so-called four-wheel drive vehicle in which all four wheels function as drive wheels.

The motor 141 generates torque to rotate the wheels 111, i.e., drive torque for driving the vehicle 100, based on supply of electric power from the battery 150. The motor 141 is a so-called motor generator (MG: Motor Generator). The torque generated by the motor 141 is transmitted to each of wheels 111 via the powertrain unit 131 and drive shaft 133 to rotate the wheels 111. Transfer of power between the battery 150 and the motor 141 is performed via an inverter, which is a power converter, but the inverter is omitted in Figure 1.

The motor 142 generates drive torque based on the supply of electric power from battery 150 to rotate each of wheels 112 via powertrain unit 132 and drive shaft 134. Since the motor 142 has the same structure as the motor 141, a detailed description of motor 142 is omitted.

Each of the motors 141 and 142 can also generate a regenerative torque that can apply a braking force to each of the wheels 111 and 112 respectively through their regenerative operation. The braking torque applied to the wheels 111 and 112 based on the regenerative torque of the motors 141 and 142 can decelerate the vehicle 100 to a stop. In the following, the drive torque output from the motor 141 to drive the vehicle 100 and the regenerative torque output from the motor 141 to brake the vehicle 100 may collectively be referred to as the "output torque". The drive torque of the motor 140 when providing driving force to the vehicle 100 is represented by a positive value, and the regenerative torque of the motor 140 when providing braking force to the vehicle 100 is represented by a negative value.

Thus, the vehicle 100 is a so-called electric vehicle equipped with two motors 141 and 142 as the driving source for traveling. The control by the control device 10 is performed simultaneously and in the same way for each of the motors 141 and 142. Therefore, in the following description, the motors 141 and 142 may be referred to collectively as "motor 140". For example, "output torque of motor 140" means the total output torque of each of the motors 141 and 142.

In the following, the members in the power transmission system for transmitting the torque of the motor 140 to the wheels 111 and 112 in the vehicle 100 may be referred to as "power transmission members". The power transmission members include, for example, the powertrain units 131 and 132 and the drive shafts 133 and 134.

The wheels 111 is equipped with a brake device 121. The brake device 121 applies a braking force to the wheel 111 by hydraulic pressure. Similarly, the wheels 112 is provided with a brake device 122. Braking of the vehicle 100 can be performed by the motors 141 and 142 or by the brake devices 121 and 122. In this embodiment, braking of the vehicle 100 is basically performed by the motor 140 only, and braking by the brake devices 121 and 122 is supplementary as needed.

The battery 150 supplies power to each of the motors 141 and 142. In this embodiment, a lithium-ion battery is used as the battery 150. The vehicle 100 has a brake ECU (Electronic Control Unit) 20 and a host ECU 30 separately from the control device 10. Each of the control device 10, the brake ECU 20, and the host ECU 30 is composed mainly of microcomputers having a CPU, a storage device, and the like. They can communicate bidirectionally with each other via a network provided in the vehicle 100. In this embodiment, the control system 40 is composed of the control device 10, the brake ECU 20, and the host ECU 30. Each of the control device 10, the brake ECU 20, and the host ECU 30 corresponds to the "processing unit".

The host ECU 30 comprehensively controls the overall operation of the vehicle 100. The host ECU 30 performs the processing necessary to control the vehicle 100 while communicating bidirectionally with each of the control device 10 and brake ECU 20. The control device 10, brake ECU 20, and host ECU 30 need not be divided into three devices as in this embodiment. For example, the functions of the brake ECU 20 and the host ECU 30 may be integrated into the control device 10.

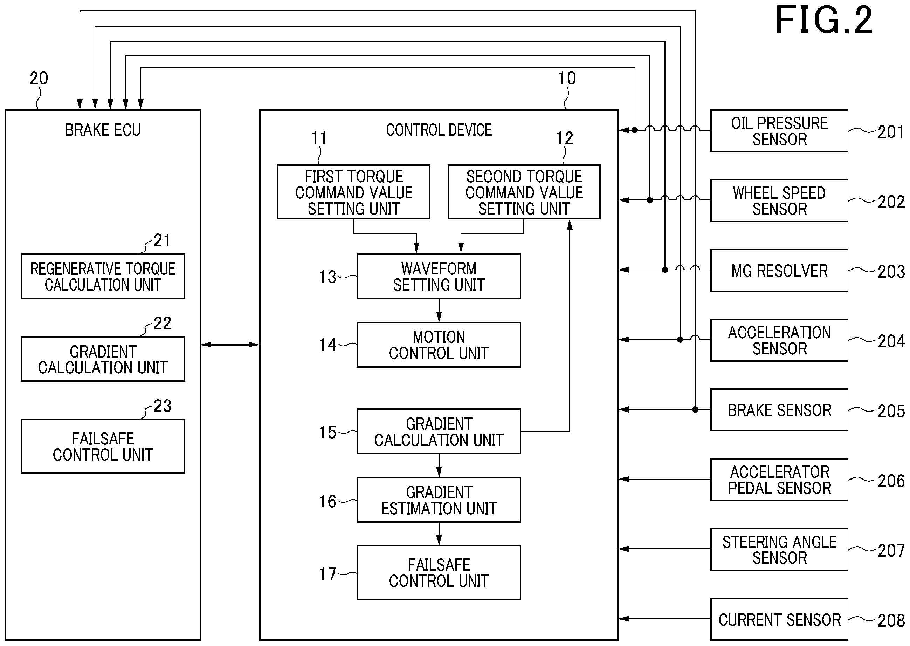

The vehicle 100 is equipped with a plurality of sensors for detecting its various state quantities. As shown in Figure 2, the plurality of sensors may include, for example, an oil pressure sensor 201, a wheel speed sensor 202, a MG resolver 203, an acceleration sensor 204, a brake sensor 205, an accelerator pedal sensor 206, a steering angle sensor 207, and a current sensor 208.

The oil pressure sensor 201 detects an oil pressure of each of the brake devices 121 and 122. Although the oil pressure sensors 201 are provided individually for each of the brake devices 121 and 122, the oil pressure sensors 201 are schematically depicted as a single block in Figure 2. Signals indicating the oil pressure detected by the oil pressure sensor 201 are transmitted to the control device 10 and the brake ECU 20.

The wheel speed sensor 202 detects rotational speed, which is the number of revolutions per unit time, of each of the wheels 111 and 112. The wheel speed sensor 202 is provided separately for each of the four wheels 111 and 112, but the wheel speed sensor 202 is schematically depicted as a single block in Figure 2. Signals indicating the rotation speed of the wheels 111 and 112 detected by the wheel speed sensor 202 are transmitted to the control device 10 and the brake ECU 20. The control device 10 and the brake ECU 20 can detect a traveling speed of the vehicle 100 based on the signals.

The MG resolver 203 detects rotational speed of the respective output shafts of each of the motors 141 and 142. Signals indicating the rotation speed detected by the MG resolver 203 are transmitted to the control device 10 and the brake ECU 20. The control device 10 and the brake ECU 20 can detect the travelling speed of the vehicle 100 based on the signals.

The acceleration sensor 204 detects an acceleration of vehicle 100. The acceleration sensor 204 is mounted to the vehicle body 101. The acceleration sensor 204 is configured as a so-called 6-axis acceleration sensor capable of detecting acceleration in each of the pitch, low, and yaw directions, in addition to acceleration in the longitudinal, lateral, and vertical directions of the vehicle body 101. Signals indicating the acceleration in each direction detected by the acceleration sensor 204 are transmitted to the control device 10 and the brake ECU 20.

The brake sensor 205 detects an amount of which a brake pedal installed in a driver's seat of the vehicle 100 is depressed. A signal indicating the amount of depressing detected by the brake sensor 205 is transmitted to the control device 10 and the brake ECU 20. The accelerator pedal sensor 206 detects an amount of which the accelerator pedal installed in the driver's seat of the vehicle 100 is depressed. A signal indicating the amount of depressing detected by the accelerator pedal sensor 206 is transmitted to the control device 10.

The steering angle sensor 207 detects a steering angle, which is an angle of rotation of a steering wheel on the driver's seat of the vehicle 100. A signal indicating the steering angle detected by the steering angle sensor 207 is transmitted to the control device 10. The current sensor 208 detect a value of a current input to each of the motors 141 and 142 for generating a driving force. The current sensor 208 is provided individually, one for each of the motors 141 and 142, but in Figure 2, the current sensor 208 is schematically depicted as a single block. Signals indicating the value of the current detected by the current sensor 208 are input to the control device 10.

The brake ECU 20 controls the operation of the brake devices 121 and 122 in response to instructions from the host ECU 30. The brake ECU 20 has a regenerative torque calculation unit 21 and a gradient calculation unit 22 as functional elements realized by a CPU executing a program stored in its storage device. In this embodiment, the brake ECU 20 corresponds to the "brake control unit".

The regenerative torque calculation unit 21 calculates a regenerative torque command value Tr*, which is a target value of regenerative torque to be output from the motor 140, based on a calculation equation, map, etc., and the amount of brake pedal depression detected by the brake sensor 205. The regenerative torque calculation unit 21 sends a regenerative request including the calculated regenerative torque command value Tr* to the control device 10. A regenerative request is a control signal transmitted from the brake ECU 20 to the control device 10 when regenerative torque needs to be generated by the motor 140.

The gradient calculation unit 22 calculates a gradient of a road surface on which the vehicle 100 is currently located. The gradient calculation unit 22 calculates a vehicle speed, which is the traveling speed of the vehicle 100, based on the rotation speed of the wheels 111 and 112 detected by the wheel speed sensor 202, for example, and calculates the gradient of the road surface based on the calculated vehicle speed and the acceleration of the vehicle 100 detected by the acceleration sensor 204.

The control device 10 has a first torque command value setting unit 11, a second torque command value setting unit 12, a waveform setting unit 13, a motion control unit 14, and a gradient calculation unit 15 as functional elements realized by the CPU executing a program stored in its storage device. In this embodiment, the control device 10 corresponds to the "motor control unit".

The motion control unit 14 controls the motion of the motor 140. The motion control unit 14 can control the output torque of each of the motors 141 and 142 individually. Hereinafter, the case in which the same control torque is output to each of the motors 141 and 142 will be used as an example. The motion control unit 14 controls the output torque of the motor 140 to one of the torque command values set by the first torque command value setting unit 11 and the second torque command value setting unit 12, respectively.

The gradient calculation unit 15 calculates the gradient of the road surface on which the vehicle 100 is currently located. Like the gradient calculation unit 22 of the brake ECU 20, the gradient calculation unit 15 calculates the gradient of the road surface based on the vehicle speed of the vehicle 100 and the acceleration of the vehicle 100 detected by the acceleration sensor 204. The first torque command value setting unit 11 sets an instructed torque command value TA*. The instructed torque command value TA* is a target value of torque to be output from the motor 140 based on a driver's operation on the vehicle 100. For example, when the driver depresses the accelerator pedal, the first torque command value setting unit 11 sets the instructed torque command value TA* based on the amount of depressing the accelerator pedal detected by the accelerator pedal sensor 206. On the other hand, when the driver is depressing the brake pedal, a regenerative request is sent from the brake ECU 20 to the control device 10. In this case, the first torque command value setting unit 11 sets the regenerative torque command value Tr* included in the regenerative request to the instructed torque command value TA*.

The second torque command value setting unit 12 sets a stop torque command value TB*. The stop torque command value TB* is a target value of torque that should be output from the motor 140 to maintain the vehicle 100 in a stopped state without using the brake devices 121 and 122 when the vehicle 100 stops.

The waveform setting unit 13 sets a torque waveform. The torque waveform defines the time variation of the target value of torque to be output from the motor 140 when the output torque of the motor 140 is changed from the instructed torque command value TA* to the stop torque command value TB*. The motion control unit 14 normally executes a first torque control to control the output torque of the motor 140 to the instructed torque command value TA*. On the other hand, when the vehicle 100 is about to stop, the motion control unit 14 executes a second torque control to stop the vehicle 100 by varying the output torque of the motor 140 from the instructed torque command value TA* to the stop torque command value TB* along the torque waveform progressively.

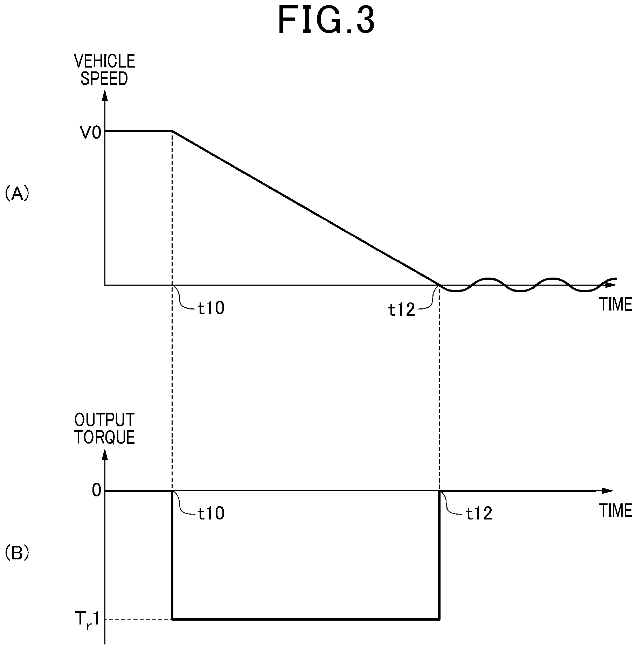

First, an example of a case in which the vehicle 100 has been stopped without the second torque control is explained with reference to Figure 3. Figure 3 shows an example of a case in which control is performed by a comparative example control device to stop the vehicle 100. Shown in part (a) of Figure 3 is an example of the time variation of the vehicle speed, which is the traveling speed of the vehicle 100. Shown in part (b) of Figure 3 is an example of the time variation of the output torque of the motor 140.

In the example in Figure 3, the vehicle 100 is traveling at a constant speed at speed V0 during the period up to time t10. In part (b) of Figure 3, the output torque of motor 140 during that period is zero. After time t10, because the brake pedal is depressed by the driver, the value of the output torque of the motor 140 is a negative value $T_r 1$. As shown in part (A) of Figure 3, after time t10, the vehicle speed of the vehicle 100 gradually decreases and reaches zero at time t12. Assuming that the amount of brake pedal depression is constant, the magnitude of the output torque of the motor 140 in this comparison example is set to a constant $T_r 1$ until time t12, when the vehicle 100 stops.

During the period when the vehicle 100 is running with deceleration, that is, from time t10 to time t12, the power transmission members between the motor 140 and the wheels 111 and 112 are in a state of torsion. Later, when the vehicle 100 stops at time t12, the torsion of the power transmission member is released. In other words, the power transmission member tries to return to its original state. Due to this effect, the vehicle body 101 may vibrate in the pitch direction after time t12, as shown in part (a) of Figure 3. Such vibration is undesirable because it causes discomfort to the occupants of the vehicle 100.

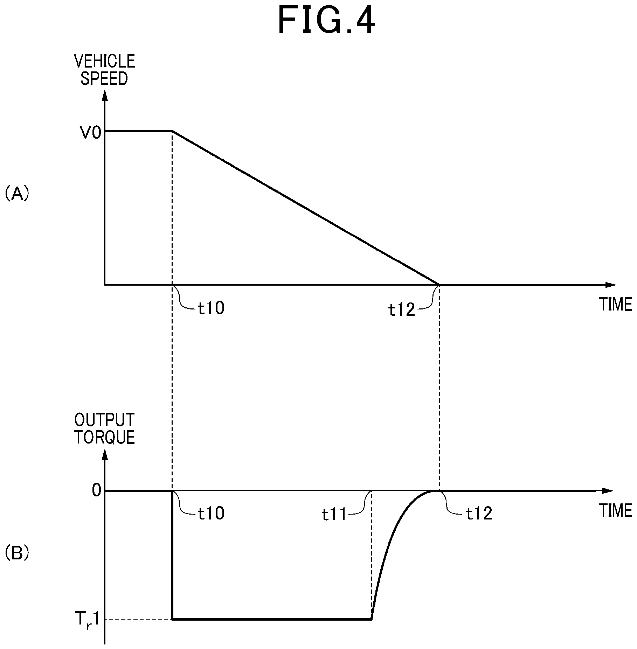

The control device 10 of this embodiment prevents the occurrence of the above-mentioned vibration by executing the second torque control, which controls the output torque of the motor 140 using the torque waveform after setting the torque waveform appropriately as described earlier. With reference to Figure 4, an example of the second torque control executed by the control device 10 is described. Figure 4 shows time variation of the vehicle speed and the output torque of the motor 140 when the second torque control is executed in a manner like Figure 3.

In the example in Figure 4, as in the example in Figure 3, the vehicle 100 is traveling at a constant speed of V0 during the period up to time t10. After time t10, the brake pedal is depressed by the driver. In the period from time t10 to time t11, the value of the output torque of the motor 140 is set to Tr1 and the vehicle speed gradually decreases from V0. This $T_r1$ is the torque output from the motor 140 based on the instructed torque command value TA* set by the first torque command value setting unit 11, i.e., the torque output in response to the brake pedal operation performed by the driver, as in conventional control.

At time t11, near the end of stopping action, the second torque control starts. In the second torque control, the value of the output torque of the motor 140 is processed to change from the instructed torque command value TA* (in this example, $T_r1$) to the stop torque command value TB* (zero in this example) along the torque waveform progressively. The waveform in the range from time t11 to time t12 in a graph shown in part (b) of Figure 4 corresponds to the torque waveform described above.

When the second torque control is performed, torque output from the motor 140 does not change abruptly from the instructed torque command value TA* to the stop torque command value TB*, but changes gradually over time. Therefore, the power transmission member, which was torsional due to braking, is restored to its original state during the period when the second torque control is being performed. In other words, the torque waveform is predetermined as an appropriate waveform to restore the torsion generated in the power transmission member to its original state.

At time t12, the vehicle 100 comes to a stop as soon as the second torque control is completed. At this timing, the torsion that had occurred in the power transmission member is gone, so no vibration of the vehicle body 101 occurs as shown in part (A) of Figure 4. Thus, according to the control device 10 of this embodiment, the vehicle 100 can be properly stopped by the braking force of the motor 140.

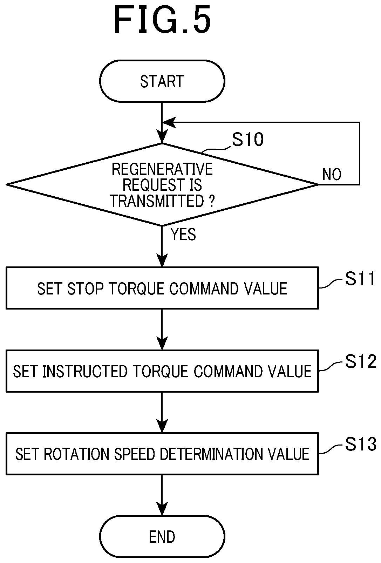

The specific processing steps executed by the control device 10 to achieve the second torque control as described above will now be described. The series of processes shown in Figure 5 are executed by the control device 10 when, for example, it is necessary to stop the vehicle 100. The process shown in Figure 5 may be repeatedly executed each time a predetermined control cycle elapse.

At first, the control device 10 determines whether a regenerative request is transmitted from the brake ECU 20 as the process of step S10. When regenerative request is not transmitted from the brake ECU 20, the control device 10 performs a negative determination in the processing of step S10 and repeats the determination processing of step S10. When a regenerative request is transmitted from the brake ECU 20, the control device 10 makes a positive determination in the processing of step S10 and moves to the processing of step S11.

The control device 10 performs the process of setting the stop torque command value TB* by the second torque command value setting unit 12 as the process of step S11. As mentioned above, the stop torque command value TB* is the target value of torque to be output from the motor 140 when the vehicle 100 comes to a stop. The second torque command value setting unit 12 of this system sets the stop torque command value TB* as the torque that should be output from the motor 140 to maintain the vehicle 100 after it stops. For example, when the output torque from the motor 140 is set to zero when the vehicle 100 stops on an upward gradient, gravity may cause the vehicle 100 to move backward. In this case, the second torque command value setting unit 12 sets the stop torque command value TB* to a value greater than zero as the target value of the torque that should be output from the motor 140 to maintain the vehicle 100 in a stopped state against gravity.

For example, the second torque command value setting unit 12 calculates the stop torque command value TB* based on a first deceleration rate of the vehicle 100 detected by the acceleration sensor 204 and a second deceleration rate of the vehicle 100 that can be calculated from the rotation speed of the wheels 111 and 112 detected by the wheel speed sensor 202. The first deceleration rate widely includes the actual deceleration of the vehicle 100 in the front-rear direction and the vehicle traveling direction component of gravitational acceleration. The second deceleration rate is the actual deceleration level of the vehicle 100 in the front-rear direction. Therefore, by obtaining the difference value between the first deceleration rate and the second deceleration rate, the vehicle forward/backward component of the gravitational acceleration can be obtained. Using this, the second torque command value setting unit 12 calculates the difference value between the first deceleration rate and the second deceleration rate, and calculates the deceleration force, which is the gravitational acceleration acting on the vehicle 100 in the front-rear direction when the vehicle 100 stops, using a known equation or the like from the calculated difference value. The second torque command value setting unit 12 calculates the stop torque command value TB* by converting the calculated deceleration force into a torque to resist the deceleration force using a predetermined equation or the like.

The first deceleration rate detected by the acceleration sensor 204 includes not only the actual deceleration of the vehicle 100 in the vehicle forward/backward direction and the vehicle forward/backward component of gravitational acceleration, but also the deceleration rate corresponding to a turning resistance torque and a braking torque. Therefore, to calculate the stop torque command value TB* more accurately, the second torque command value setting unit 12 may exclude the turning resistance torque and the braking torque from the stop torque command value TB*.

The turning resistance torque is the force detected by the acceleration sensor 204 as the force in the direction that apparently decelerates the vehicle 100 when the vehicle 100 is turning, converted into a torque that resists this force. The turning resistance torque $T_{gy}$ is calculated, for example, by the following equation f1.

[Math 1]

$$T_{gy} = \frac{mV^2\sin\left(\frac{\theta}{K_h}\right)}{L} \times L_r r \quad (f1)$$

In the Equation f1, m is the mass of the vehicle 100 and V is the vehicle speed of the vehicle 100. θ is the steering angle detected by the steering angle sensor 207. $K_h$ is a steering gear ratio. L is a wheelbase of the vehicle 100, Lr is a distance from the center of gravity of the vehicle 100 to the axle of the wheel 112 (i.e., rear wheel), and r is a respective radius of the wheels 111 and 112.

The braking torque is the braking force generated in the braking devices 121 and 122 converted into a torque. The braking torque can be calculated based on a signal from the brake ECU 20, for example. Alternatively, the braking torque can be calculated based on a signal from the brake sensor 205, a signal from the oil pressure sensor 201, or the like.

The second torque command value setting unit 12 subtracts both the turning resistance torque and the braking torque from the stop torque command value TB* as the process of step S11 and calculates the stop torque command value TB* again. Alternatively, the second torque command value setting unit 12 may calculate the stop torque command value TB* based on a map or equation from the road surface gradient calculated by the gradient calculation unit 15.

The control device 10 sets the instructed torque command value TA* by the first torque command value setting unit 11 as the process of step S12 following step S11. Specifically, the first torque command value setting unit 11 calculates the drive torque command value from the amount of depressing the accelerator pedal detected by the accelerator pedal sensor 206 using a calculation equation or map. Then, the first torque command value setting unit 11 sets the instructed torque command value TA*, which is the target value of the torque to be output from the motor 140, based on the calculated drive torque command value and the regenerative torque command value Tr* included in the regenerative request transmitted from the brake ECU 20 in the process of step S10.

When the vehicle 100 has been stopped, the drive torque command value is zero because the driver normally does not depress the accelerator pedal, i.e., the amount of depressing the accelerator pedal is zero. Therefore, the instructed torque command value TA* is set to the same value as the regenerative torque command value Tr*.

The control device 10 performs the process of setting a rotation speed determination value $\omega_s$ by the motion control unit 14 as the process of step S13 following step S12. The rotation speed determination value $\omega_s$ is a determination value for determining whether the rotation speed of the wheels 111 and 112 has decreased to the rotation speed at which the second torque control should be started. The rotation speed determination value $\omega_s$ is calculated, for example, by the following equation f2.

[Math 2]

$$\omega_s = \frac{\Delta T_r \times \tau}{I_v} \quad (f2)$$

In the equation f2, $\Delta T_r$ is a torque difference value calculated by subtracting the instructed torque command value TA* calculated in step S12 from the stop torque command value TB*, which is calculated in step S11. $I_v$ is a mass of the vehicle body 101 converted to inertia in the rotating system such as wheels 111. The inertia $I_v$ is calculated using the mass m of the vehicle 100 and the radius r of the respective wheels 111 and 112, for example, by the equation $I_v = mr^2$. τ is a predetermined value as time constant for the torque waveform of the primary delay system used in the second torque control. How to set time constant τ is explained later.

After the rotation speed determination value $\omega_s$ is set using Formula f2, in a case that the second torque control is started at the time when the rotation speed of the wheel 111 falls below the rotation speed determination value $\omega_s$, the vehicle speed of the vehicle 100 becomes zero at approximately the same timing as the timing when the second torque control is completed. Thus, the rotation speed determination value $\omega_s$ is set so that the point in time when the braking torque output from the motor 140 reaches the stop torque command value TB* (i.e., the point in time when the second torque control is completed) and the point in time when the vehicle 100 stops coincide with each other.

When setting the rotation speed determination value $\omega_s$, an equation different from the above-mentioned equation f2 may be used in a case that the point in time when the control drive torque output from the motor 140 becomes the stop torque command value TB* and the point in time when the vehicle 100 stops coincide with each other. The "point in time when the vehicle 100 comes to a stop" does not have to be the point in time when the vehicle speed is completely zero. For example, it may be a timing when the absolute value of the vehicle speed falls below a predetermined small threshold value.

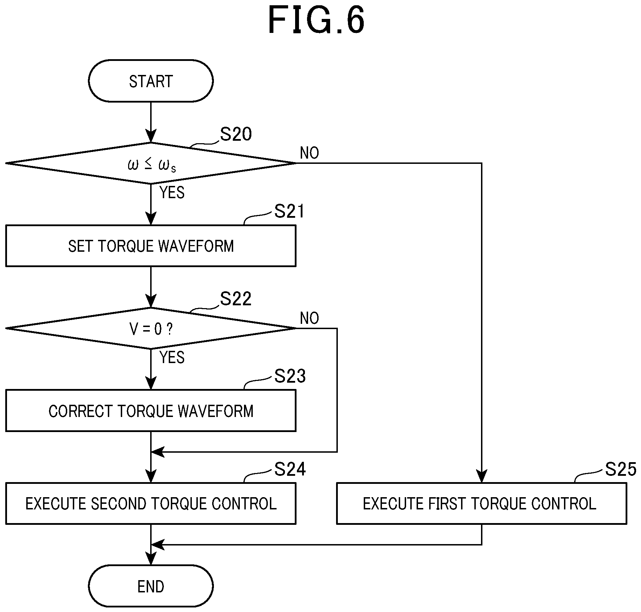

After completing the process shown in Figure 5, the control device 10 repeats the series of processes shown in Figure 6 in a predetermined cycle. As shown in Figure 6, at first, the control device 10 determines, as the process of step S20, whether the rotation speed $\omega$ of each of the wheels 111 and 112 detected by the wheel speed sensor 202 is less than the rotation speed determination value $\omega_s$ set in the process of step S13 in Figure 5. Specifically, the control device 10 calculates as average value of the rotation speeds of the wheels 111 and 112 detected by the wheel speed sensor 202, and then determines whether the average value of the rotation speeds is less than the rotation speed determination value $\omega_s$. In this embodiment, this process of step S20 corresponds to the process of determining whether the vehicle speed of the vehicle 100 is below a predetermined speed. The predetermined speed is, for example, 1 [km/h].

In the process of step S20, the control device 10 may determine whether the average value of the rotation speed of wheels 111 is less than or equal to the rotation speed determination value $\omega_s$. The determination about the rotation speed $\omega$ in step S20 may be based on the rotation speed measured by the MG resolver 203. In this case, the rotation speed of the motor 140 measured by the MG resolver 203 may be converted to the average value of rotation speed of the wheels 111, etc. The rotation speed determination value $\omega_s$ may be set as the determination value for the rotation speed measured by the MG resolver 203. In this case, the target timing for starting the second torque control is indirectly set with respect to the average value of rotational speed of the wheels 111, etc.

At the initial time point when the motor 140 generates regenerative torque to stop the vehicle 100, in most cases, the vehicle speed of the vehicle 100 exceeds the predetermined speed $V_{th}$, so the rotation speed $\omega$ of the motor 140 is greater than the rotation speed determination value $\omega_s$. Therefore, the control device 10 makes a negative decision in the process of step S20 and moves to the process of step S25.

In the control device 10, the first torque control is executed by the motion control unit 14 as the process of step S25. The first torque control is a control to make an output torque of the motor 140 match the instructed torque command value TA*. Therefore, when the motion control unit 14 is executing the first torque control, the output torque of the motor 140 changes in accordance with the amount of depressing the brake pedal. Specifically, the greater the amount the brake pedal is depressed, the more regenerative torque is output from the motor 140. The regenerative torque output from the motor 140 applies a braking force to the vehicle 100, which causes the vehicle 100 to decelerate. The rotation speeds $\omega$ of the wheels 111 and 112 gradually decrease, but the second torque control is not yet executed at this time.

. Thereafter, when the rotation speed $\omega$ of the wheels 111 and 112 becomes less than the rotation speed determination value $\omega_s$, in other words, when the vehicle speed of the vehicle 100 becomes less than the predetermined speed $V_{th}$, the control device 10 makes a positive determination in the processing of step S20 and moves to the processing of step S21. In this case, the second torque control will be started by shifting to step S24 described below. Prior to the start of the second torque control, in step S21, the torque waveform is set by the waveform setting unit 13. The torque waveform is set so that the pitch direction vibration that occurs in the vehicle 100 as the vehicle stops can be damped. The waveform setting unit 13 sets the torque waveform by using, for example, the following equation f3.

[Math 3]

$$T_r(t) = \Delta T_r(1 - e^{-\frac{t}{\tau}}) \quad (f3)$$

$T_r(t)$ in the equation f3 is a function that indicates a change in the torque command value of motor 140 over time. A waveform indicated by this function $T_r(t)$ corresponds to the torque waveform. "t" is the elapsed time from the timing when the first transition to step S21 is made, i.e., when the execution of the second torque control is started.

In the equation f3, $\Delta T_r$ is the same as the torque difference value $\Delta T_r$ in the equation f2, i.e., the stop torque command value TB* minus the instructed torque command value TA*. $\tau$ is the same as time The time constant $\tau$ is set by the waveform setting unit 13.

When the time constant $\tau$ of the torque waveform is made too large, the frequency of the waveform indicating the change in vehicle speed of the vehicle body 101 becomes too low during the execution of the second torque control, and this frequency becomes lower than the pitch resonance frequency of the vehicle 100. As a result, pitching of the vehicle body 101 becomes difficult to occur. However, in order to avoid giving the occupants a sense that the braking force has been reduced to zero before the vehicle comes to a stop (i.e., while the vehicle is running), a so-called "G-out," or a feeling of discomfort, it is preferable to let the vehicle body 101 pitch. Therefore, the waveform setting unit 13 in this embodiment sets time constant $\tau$ to a value below the pitch resonance frequency so that the torque waveform becomes a waveform containing a frequency component higher than the pitch resonance frequency of the vehicle 100.

The pitch resonance frequency $f_p$ of the vehicle 100 is obtained by the following equation f4.

[Math 4]

$$f_p = \frac{1}{2\pi} \sqrt{\frac{22.3 g h_c}{0.14 L_t \times L}} \quad (f4)$$

In the equation 4, g is the acceleration of gravity, L is the wheelbase of the vehicle 100, Lt is the total length of the vehicle 101, and $h_c$ is the height of the center of gravity of the vehicle 101. The waveform setting unit 13 sets the value of the reciprocal of the pitch resonance frequency $f_p$ (i.e., the pitch resonance period of the vehicle 100) calculated as described above as the upper limit value of the time constant $\tau$ and sets the time constant $\tau$ to be a value lower than the upper limit value. As a result, the torque waveform is set as a waveform that includes a frequency component higher than the pitch resonance frequency of the vehicle 100. Thus, the equation f4 has the meaning of an equation for determining the upper limit value of the time constant $\tau$.

On the other hand, when the time constant $\tau$ of the torque waveform is set too small, the torsion in the power transmission member is released too quickly during the execution of the second torque control, and the occupants may feel the impact of the so-called backlash. There is also a possibility that the vehicle 100 will stop without sufficient release of the torsion in the power transmission member, causing the vehicle 100 to vibrate after stopping.

Therefore, the waveform setting unit 13 sets the time constant $\tau$ to a value that satisfies the condition shown in the following equation f5.

[Math 5]

$$\frac{\Delta T_r}{K_d \times \tau} < \omega_\alpha \quad (f5)$$

In the equation f5, $\Delta T_r$ is the torque same as that used in the equation f2, i.e., the torque difference value obtained by subtracting the instructed torque command value TA* from the stop torque command value TB*. $K_d$ is a coefficient indicating the stiffness of the power transmission member, specifically the stiffness of the drive shafts 133 and 134 or the front and rear suspension. $\omega_\alpha$ is a threshold value of the rotational speed of the wheels 111 and 112 at which backlash is unlikely to occur in the power transmission member. The rotational speed threshold $\omega_\alpha$ is set to 4.8 [rad/s], for example.

The equation f5 can be used to set a lower limit for the time constant $\tau$. When the time constant $\tau$ is set above the lower limit, the gradient of the time variation of the torque waveform immediately after the start of the second torque control is kept below a predetermined value. The gradient of the time variation of the torque waveform immediately after the start of the second torque control is kept below a predetermined value. In the process of step S21 shown in Fig. 6, the waveform setting unit 13 sets the time constant $\tau$ to be a value between the upper limit value and the lower limit value and sets the torque waveform using the time constant $\tau$ and equation f3. This allows the vehicle 100 to stop properly without the occupant feeling either G-out or backlash shock when the second torque control is executed.

A fixed value set in advance may be used for the time constant $\tau$ so that it always falls between the lower and upper limits described above. The time constant $\tau$ may be calculated and set each time using equation f5, etc. according to the calculated value of the torque difference value $\Delta T_r$.

As the process of step S22 following step S21, the waveform setting unit 13 calculates the vehicle speed V, which is the traveling speed of the vehicle 100, from the rotation speed of the wheels 111 and 112 and determines whether the calculated vehicle speed V is zero. Since the vehicle speed V is not zero at the time before the vehicle 100 stops, the waveform setting unit 13 also makes a negative determination in step S22. In this case, in the control device 10, the second torque control is executed by the motion control unit 14 as the process of step S24. Specifically, the motion control unit 14 executes the process of adjusting the output torque of the motor 140 to become a magnitude in accordance with the torque waveform $T_r$ (t) shown in equation f3.

After the processing of step S24 is executed in this manner, the control device 10 terminates the processing shown in Fig. 6 once and starts the processing shown in Fig. 6 again after the elapse of a predetermined cycle. Thereafter, the control device 10 repeatedly executes the process of step S24 based on the torque waveform $T_r$ (t) during the period when the control device 10 makes a negative determination in the process of step S22. As the processing of step S24 is repeatedly executed, the output torque of the motor 140 changes along the torque waveform $T_r$ (t) from the instructed torque command value TA* to the stop torque command value TB*, and finally the vehicle 100 comes to a stop. Thus, the process of step S24 is repeated to achieve the stopping of the vehicle 100. The second torque control is the process performed during the period from time t11 to time t12 in the example of Fig. 4.

When the series of processes shown in Figure 6 is executed repeatedly, the process of step S21 is executed only at the first execution, and after the second execution, the process of step S21 is skipped. Alternatively, the process of step S21 may be executed each time, and the torque waveform may be adjusted according to the situation.

. Thereafter, when the vehicle speed V reaches zero, i.e., when the vehicle 100 stops, the waveform setting unit 13 makes a positive determination in the process of step S22. In this case, the waveform setting unit 13 corrects the torque waveform Tr (t) as necessary in step S23. For example, when it is determined that there is an error in the calculation of the stop torque command value TB* and it is difficult to maintain the vehicle in the stop state as it is, the necessary torque is added or subtracted from the entire torque waveform to adjust it so that the vehicle can maintain the stop state. Such adjustment of torque can be based on, for example, changes in vehicle speed immediately after stopping. After the process of step S23 is executed, the motion control unit 14 executes the process of step S24, i.e., the second torque control, to maintain the vehicle 100 in a stopped state.

In the configuration shown in Figure 1, when an abnormality has occurred in the motor 140, the first and second torque controls shown in Figures 5 and 6 cannot be properly executed. In such a case, for example, the vehicle 100 may not stop because the desired regenerative torque cannot be obtained from the motor 140.

For such case, the control system 40 of this embodiment monitors an operating state of the motor 140, and when an abnormality in an operation of the motor 140 is detected, a failsafe control of the motor 140 is executed. To realize such a configuration, as shown in Figure 2, the brake ECU 20 is further provided with a failsafe control unit 23 as a functional element realized by the CPU executing a program stored in its storage device. The control device 10 is further provided with a gradient estimation unit 16 and a failsafe control unit 17 as functional elements realized by the CPU executing a program stored in its storage device.

The failsafe control unit 23 of the brake ECU 20 monitors the operation of the motor 140 when a negative determination is made in the processing of step S20 shown in Figure 6, i.e., when the vehicle speed of the vehicle 100 exceeds a predetermined speed $V_{th}$ (e.g., 1 [km/h]). For example, the failsafe control unit 23 calculates the actual output torque $T_m$ of the motor 140 based on a calculation equation or the like from the rotation speed of the motor 140 detected by the MG resolver 203 and a rated value of the motor 140. Then, the failsafe control unit 23 determines whether an abnormality has occurred in the motor 140 by comparing the calculated actual output torque $T_m$ of the motor 140 with the regenerative torque command value Tr* calculated by the regenerative torque calculation unit 21.

Specifically, as shown in Figure 6, when a negative determination is made in step S20, first torque control is executed as the process in step S25. In other words, the output torque of the motor 140 is controlled to the instructed torque command value TA*. When the vehicle 100 is decelerating, the instructed torque command value TA* is set to the regenerative torque command value Tr*, so the output torque of the motor 140 is controlled to the regenerative torque command value Tr*. Therefore, when the motor 140 is functioning normally, the actual output torque $T_m$ of the motor 140 is expected to be same as the regenerative torque command value Tr*.

Therefore, when the actual output torque $T_m$ of the motor 140 satisfies $Tr*-\alpha \leq T_m \leq Tr*+\alpha$, the failsafe control unit 23 determines that motor 140 is functioning normally and does not execute a second failsafe control. Note that $\alpha$ is a predetermined threshold value. On the other hand, when the actual output torque $T_m$ of the motor 140 satisfies $T_m < Tr*-\alpha$ or $Tr*+\alpha < T_m$, the failsafe control unit 23 determines that the motor 140 is abnormal and executes the second failsafe control. The failsafe control unit 23 executes, for example, a control to stop the control device 10 and the motor 140 as the second failsafe control. In this embodiment, the failsafe control unit 23 corresponds to the "driving failsafe control unit".

The failsafe control unit 17 of the control device 10 monitors the operation of the motor 140 when a positive determination is made in step S20 of Fig. 6, i.e., when the vehicle speed of the vehicle 100 is below a predetermined speed $V_{th}$ (e.g., 1 [km/h]). In the monitoring, the failsafe control unit 17 uses the gradient of the road surface on which the vehicle 100 is currently located. To accurately detect the gradient of the road surface, the control device 10 has a gradient estimation unit 16.

The gradient estimation unit 16 calculates an estimated value of the gradient of the road surface based on the calculated value of the gradient of the road surface calculated by the gradient calculation unit 15 of the control device 10 and the calculated value of the gradient of the road surface calculated by the gradient calculation unit 22 of the brake ECU 20. For example, the gradient estimation unit 16 calculates an average value between the former calculated value of the gradient of the road surface and the latter calculated value of the gradient of the road surface, and the calculated average value is the estimated value of the gradient of the road surface.

Like the failsafe control unit 23 of the brake ECU 20, the failsafe control unit 17 of the control device 10 calculates the actual output torque $T_m$ of the motor 140 based on a calculation equation or the like from the rotation speed of the motor 140 detected by the MG resolver 203 and the rating of the motor 140. The failsafe control unit 17 determines whether an abnormality has occurred in the motor 140 by comparing the calculated actual output torque of the motor 140 with the stop torque command value TB*, which is set by the second torque command value setting unit 12.

As shown in Figure 6, when a positive decision is made in step S20, the second torque control is executed as step S24. In other words, the output torque of motor 140 is controlled along the torque waveform $T_m$ (t) from the instructed torque command value TA* to the stop torque command value TB*. Therefore, when the motor 140 is functioning normally, when the actual output torque $T_m$ of the motor 140 converges, a convergence value $T_{mc}$ indicates the torque corresponding to the stop torque command value TB*, i.e., the torque corresponding to the gradient of the road surface on which the vehicle 100 is currently located.

The failsafe control unit 17 calculates a gradient-driven torque $T_{up}$ based on the estimated value of the gradient of the road surface calculated by the gradient estimation unit 16. The gradient-driven torque $T_{up}$ is the torque that should be output from the motor 140 to maintain the vehicle 100 in a stopped state. When the convergence value $T_{mc}$ of the actual output torque of the motor 140 satisfies $T_{up}$ $-\beta\leq T_{mc} \leq T_{up}$ $+\beta$, the failsafe control unit 17 determines that the control device 10 and the motor 140 are normal and does not perform a first failsafe control. Note that $\beta$ is a predetermined threshold value. threshold value $\beta$ is set to a value corresponding to a torque equivalent to 0.1 [G], for example. On the other hand, when the convergence value $T_{mc}$ of the actual output torque of the motor 140 satisfies $T_{mc} < T_{up}$ $-\beta$ or $T_{up}$ $+\beta < T_{mc}$ , the failsafe control unit 17 determines that an abnormality has occurred in the motor 140 and executes the first failsafe control. In this system, $T_{up}$ $-\beta$ and $T_{up}$ $+\beta$ correspond to the "abnormality determination values". The failsafe control unit 17 executes, for example, a process to stop the control device 10 and the motor 140 or to stop the second torque control as the first failsafe control. In this embodiment, failsafe control unit 17 corresponds to the "stopping failsafe control unit".

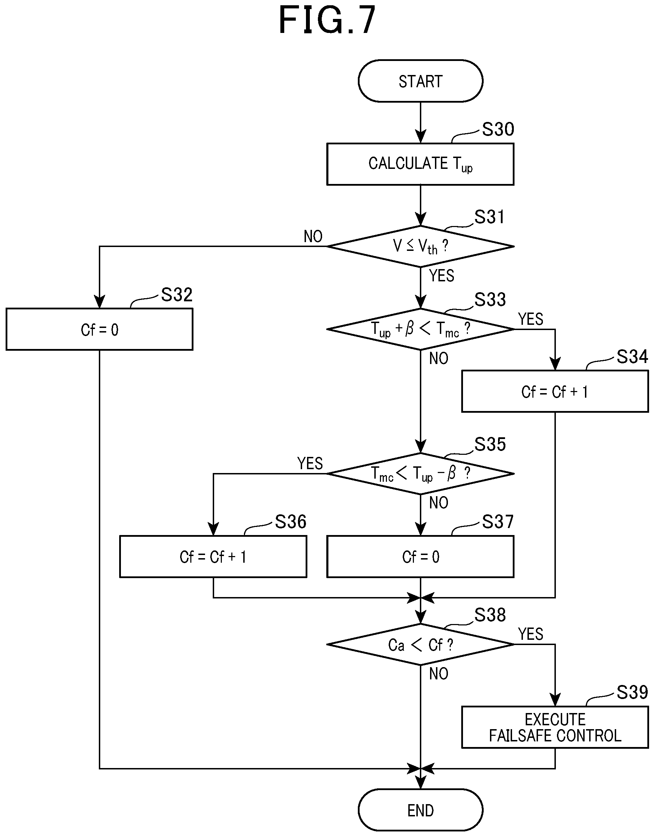

The following is a description of the specific processing steps executed by the failsafe control unit 17 to achieve the control described above. The series of processes shown in Fig. 7 are executed by the failsafe control unit 17. The process shown in Fig. 7 may be repeatedly executed each time a predetermined control cycle elapse.

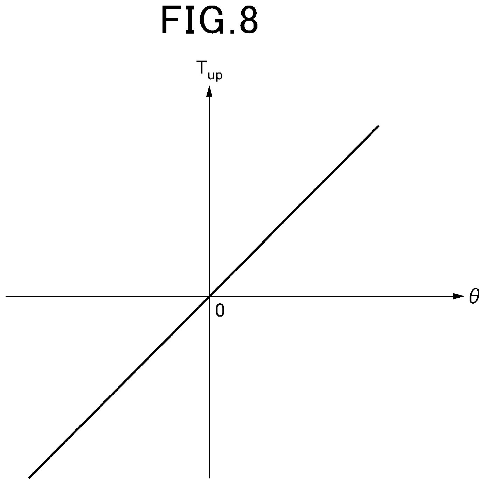

The failsafe control unit 17 first calculates the gradient-driven torque $T_{up}$ as the process of step S30. Specifically, the failsafe control unit 17 calculates the gradient-driven torque $T_{up}$ by using the map shown in Figure 8 from the estimated value $\theta$ of the gradient of the road surface calculated by the gradient estimation unit 16. The estimated value $\theta$ is positive for an uphill gradient, and the steeper the gradient of the uphill gradient, the larger its absolute value. In the case of a downhill gradient, the estimated value $\theta$ is negative, and the steeper the downhill gradient, the larger the absolute value of the estimated gradient.

As shown in Figure 7, the failsafe control unit 17 determines whether the vehicle speed V of the vehicle 100 is below the predetermined speed $V_{th}$ as the process of step S31 following step S30. When the vehicle speed V exceeds the predetermined speed $V_{th}$, that is, when the first torque control is being executed, the failsafe control unit 17 makes a negative determination in step S31 and initializes the value of the abnormality counter Cf as a process in step S32.

On the other hand, when the vehicle speed V is below the predetermined speed $V_{th}$ , that is, when the second torque control is being executed, the failsafe control unit 17 makes an positive determination in the processing of step S31. In this case, the failsafe control unit 17 determines whether the convergence value $T_{mc}$ of the actual output torque of the motor 140 exceeds Tup $+\beta$ as the process of step S33. The failsafe control unit 17 monitors the transition of the actual output torque $T_m$ of the motor 140 after the second torque control is started and determines that the actual output torque $T_m$ of the motor 140 has converged based on the change per unit time of the actual output torque $T_m$ being below a predetermined value, then the value of the actual output torque $T_m$ is used as the convergence value $T_{mc}$. When the convergence value $T_{mc}$ exceeds $T_{up}$ + $\beta$, the failsafe control unit 17 makes a positive determination in step S33. In this case, the failsafe control unit 17 determines that an abnormality has occurred in the motor 140 and increments the value of the abnormality counter Cf as the process of step S34.

When the convergence value $T_{mc}$ is less than or equal to $T_{up}$ + $\beta$, the failsafe control unit 17 makes a negative determination in the process of step S33. In this case, the failsafe control unit 17 determines whether the convergence value $T_{mc}$ is less than $T_{up}$ $-\beta$ as the process of step S34. When the convergence value $T_{mc}$ is less than $T_{up}$ $-\beta$, the failsafe control unit 17 makes a positive determination in the process of step S35. In this case, the failsafe control unit 17 determines that an abnormality has occurred in the motor 140 and increments the value of the abnormality counter Cf as the process of step S36. Thus, in this system, the value of the abnormality counter Cf corresponds to the number of times an abnormality is determined.

The failsafe control unit 17 makes a negative determination in the process of step S35 when the convergence value $T_{mc}$ exceeds $T_{up}$ - $\beta$. In this case, the failsafe control unit 17 determines that the control device 10 and the motor 140 are normal and initializes the value of the error counter Cf as the process of step S37.

When any of steps S34, S36, or S37 is executed, the failsafe control unit 17 determines whether the abnormality counter Cf exceeds the predetermined value Ca as the process of step S38. The predetermined value Ca is set to an integer greater than zero. In this system, the predetermined value Ca corresponds to the threshold value. When the convergence value $T_{mc}$ satisfies $T_{up}$ $-\beta\leq T_{mc} \leq T_{up}$ $+\beta$, that is, when the motor 140 is functioning normally, the failsafe control unit 17 makes a negative determination in step S38 because the error counter Cf is still set to zero. In this case, the failsafe control unit 17 terminates the series of processes shown in Figure 7.

On the other hand, when the convergence value $T_{mc}$ satisfies $T_{mc} < T_{up}$ $-\beta$ or $T_{up}$ $+\beta <T_{mc}$, that is, when an abnormality occurs in motor 140, the process of step S34 or step S36 is performed. In the initial stage when an abnormality occurs, the value of the abnormality counter Cf is less than the predetermined value Ca, so the failsafe control unit 17 makes a negative determination in the processing of step S38. Thereafter, as the process shown in Fig. 7 is executed in a predetermined cycle, the value of the abnormality counter Cf increases as the process of step S34 or step S36 is repeatedly executed. When the value of the abnormality counter Cf exceeds the predetermined value Ca, the failsafe control unit 17 executes the first failsafe control as the process of step S39.

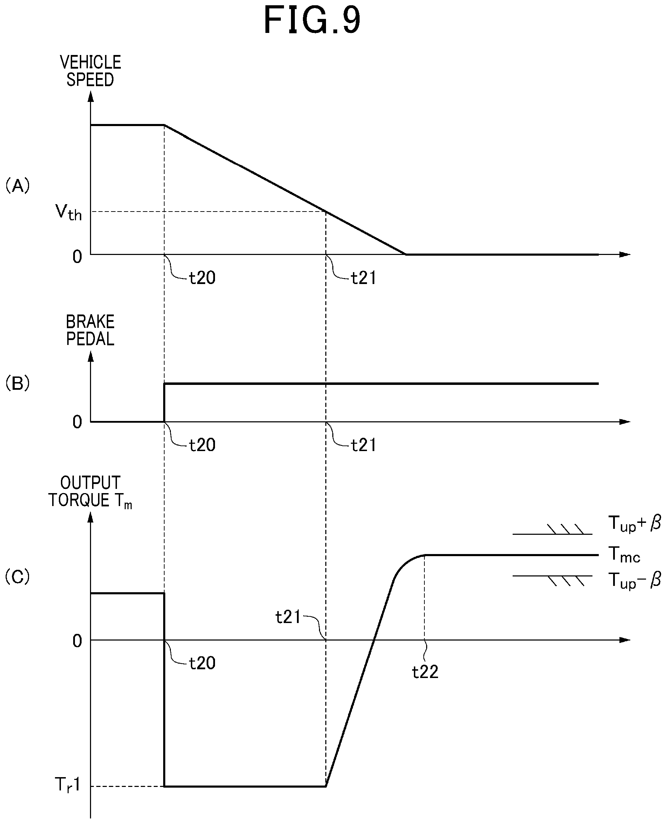

Next, an example of the operation of this control system 40 will be described. Assuming that the driver depresses the brake pedal at time t20 as shown in part (B) of Figure 9, a negative value of torque $T_r1$, i.e. regenerative torque, is output from the motor 140 as shown in part (C) of Figure 9. After time t20, the vehicle speed V of the vehicle 100 gradually decreases as shown in part (A) of Figure 9. The first torque control is executed during the period from time t20 to time t21 when the vehicle speed V of vehicle 100 becomes below the predetermined speed $V_{th}$. In other words, the output torque of the motor 140 is controlled to the instructed torque command value TA*. The instructed torque command value TA* is set to the regenerative torque command value Tr*.

When the vehicle speed V of the vehicle 100 falls below the predetermined speed $V_{th}$ at time t21, the second torque control is executed thereafter. In other words, the output torque of the motor 140 is controlled from the instructed torque command value TA* to the stop torque command value TB* along the torque waveform $T_r$ (t). In Figure 9, the case where the stop torque command value TB* is set to a positive value, in other words, the case where the vehicle 100 stops on an uphill ramp, is shown. At this time, suppose that the output torque $T_m$ of the motor 140 converges at time t22. When the convergence value of the output torque $T_{mc}$ at that time satisfies $Tup - \beta \leq T_{mc} \leq Tup + \beta$ as shown in part (C) of Figure 9, the failsafe control unit 17 determines that the control device 10 and motor 140 are normal. Then the first failsafe control is not executed.

On the other hand, when the convergence value $T_{mc}$ satisfies $T_{mc} < T_{up} - \beta$ or $T_{up} + \beta < T_{mc}$, the first failsafe control is executed on condition that the value of the abnormality counter Cf exceeds the predetermined value Ca. According to the control system 40 of the vehicle 100 of this embodiment described above, the actions and effects shown in (1) through (7) below can be obtained.

(1) The motion control unit 14 executes the first torque control to control the output torque of the motor 140 based on the instructed torque command value TA* when the vehicle speed V of the vehicle 100 exceeds the predetermined speed $V_{th}$. The motion control unit 14 also executes the second torque control that varies the output torque of the motor 140 from the instructed torque command value TA* toward the stop torque command value TB* along the torque waveform $T_r$ (t) when the vehicle speed V of the vehicle 100 is below the predetermined speed $V_{th}$. The failsafe control unit 17 determines whether an abnormality has occurred in the motor 140 based on a comparison between the actual output torque $T_m$ of the motor 140 when the second torque control is executed and the abnormality determination values $T_{up} - \beta$ and $T_{up} + \beta$. When the failsafe control unit 17 determines that an abnormality has occurred in the motor 140, it executes the first failsafe control of the motor 140. According to this configuration, the output torque of motor 140 changes along the torque waveform $T_r$ (t) from the instructed torque command value TA* to the stop torque command value TB* by executing the second torque control. This change in the output torque of the motor 140 along the torque waveform $T_r$ (t) enables the vehicle 100 to be stopped more appropriately. In addition, when an abnormality is determined to have occurred in the motor 140 by comparing the output torque of the motor 140 with the abnormality determination values $T_{up} - \beta$ and $T_{up} + \beta$ after the second torque control is started to be executed, the failsafe control of the motor 140 is executed, thus it is possible to ensure the safety of the vehicle 100.

(2) The abnormal determination value $T_{up} + \beta$ is the upper limit determination value that defines the upper limit of the convergence value $T_{mc}$. The abnormal determination value $T_{up} - \beta$ is the lower limit determination value that defines the lower limit of the convergence value $T_{mc}$. The failsafe control unit 17 determines that an abnormality has occurred in the motor 140 based on the convergence value $T_{mc}$ exceeding the abnormality determination value $T_{up} + \beta$ or that the convergence value $T_{mc}$ is less than the abnormality determination value $T_{up} - \beta$". According to this configuration, it is possible to easily determine whether an abnormality has occurred in the motor 140.

(3) The failsafe control unit 17 prohibits the second torque control or the control of the motor 140 as the failsafe control. According to this configuration, safety can be more accurately ensured when an abnormality occurs in the motor 140.

(4) The failsafe control unit 17 counts the number of times that an abnormality is detected in the motor 140 as the abnormality counter Cf, and executes the first failsafe control based on the abnormality counter Cf exceeding a predetermined value Ca. According to this configuration, for example, a situation in which the first failsafe control is executed only when an abnormality of the motor 140 is mistakenly detected once can be avoided, so that first failsafe control can be executed in a more realistic manner.

(5) Brake ECU 20 has a regenerative torque calculation unit 21 and a failsafe control unit 23. The regenerative torque calculation unit 21 calculates a regenerative torque command value Tr*, which is a command value of the regenerative torque to be output from the motor 140. When the vehicle speed V of the vehicle 100 exceeds the predetermined speed $V_{th}$, the failsafe control unit 23 determines whether an abnormality has occurred in the motor 140 by comparing the actual output torque $T_m$ of the motor 140 with the regenerative torque command value Tr*. The failsafe control unit 23 executes the second failsafe control of the motor 140 based on the determination that an abnormality is occurring in the motor 140. According to this configuration, even when the vehicle 100 is traveling at a speed exceeding the predetermined speed $V_{th}$, when an abnormality occurs in the motor 140, the second failsafe control is executed, thereby further enhancing the safety of the vehicle 100.

(6) The control system 40 is further provided with a gradient estimation unit 16 that estimates the gradient of the road surface on which the vehicle 100 stops. By using the map shown in Figure 8, the failsafe control unit 17 sets the abnormality determination values $T_{up}-\beta$ and $T_{up}+\beta$ variably based on the gradient of the road surface estimated by the gradient estimation unit 16. According to this configuration, it is possible to set more appropriate abnormality determination values.

(7) The gradient estimation unit 16 calculates the estimated value of the gradient of the road surface based on the calculated value of the gradient of the road surface calculated by the gradient calculation unit 15 of the control device 10 and the calculated value of the gradient of the road surface calculated by the gradient calculation unit 22 of the brake ECU 20. According to this configuration, the gradient of the road surface can be estimated with high accuracy, and as a result, the calculation accuracy of the abnormality determination value can be improved.

The above embodiment can also be implemented in the following forms. The process of step S20 shown in Figure 5 may be executed based on the rotational speed of the motor 140 detected by the MG resolver 203. In this case, when the rotation speed of the motor 140 detected by the MG resolver 203 is converted to the rotation speed of the wheels 111 using a predetermined equation, a similar determination process can be performed. The rotation speed determination value $\omega_s$ may be set for the rotation speed of the motor 140 detected by the MG resolver 203.

The vehicle 100 may use in-wheel motors embedded in the respective wheels 111 and 112 instead of the motors 140 of Figure 1. The control device 10 performs the same control as the control device 10 of the above embodiment by controlling the braking torque of the in-wheel motors embedded wheels 111 and 112 respectively.

The configuration of the above embodiments is not limited to vehicle 100 but can be applied to any mobile object. The control system 40 and its control method described in this disclosure may be realized by one or more dedicated computers provided by configuring a processor and memory programmed to perform one or more functions embodied by a computer program. The control system 40 and the control method described in this disclosure may be realized by one or more dedicated computers provided by comprising a processor including one or more dedicated hardware logic circuits. The control system 40 and its control method described in this disclosure may be realized by one or more dedicated computers provided by a processor programmed to perform one or more functions and memory and comprising one or more processors including one or more dedicated hardware logic circuits. The computer program may be stored on a computer-readable non-transitory recording medium as instructions to be executed by the computer. The dedicated and hardware logic circuits may be realized by digital or analog circuits including multiple logic circuits.

The present disclosure is not limited to the above specific examples. Design changes made by those skilled in the art to the above examples are also included in the scope of the present disclosure as long as they have the features of the present disclosure. The elements provided in each of the above examples, as well as the arrangement, conditions, shape, etc. thereof, are not limited to those shown in the examples, but can be changed as needed. The elements provided in each of the aforementioned examples can be combined as needed as long as there is no technical inconsistency.

## Claims

1. A control system (40) for a mobile object (100) in which a motor (140) is mounted as a drive source for traveling, the system comprising:

a first torque command value setting unit (11) that sets an instructed torque command value, which is a target value of torque to be output from the motor based on a driver's operation on the mobile object;
a second torque command value setting unit (12) that sets a stop torque command value, which is a target value of the torque to be output from the motor to maintain the stopped state of the mobile object when the mobile object has been stopped;
a waveform setting unit (13) that sets a torque waveform defining a time variation of a target value of an output torque of the motor;
a motion control unit (14) that executes a first torque control when a travelling speed of the mobile object exceeds a predetermined speed and executes a second torque control when the traveling speed of the mobile object is equal to or below the predetermined speed, the first torque control being controlling the output torque of the motor based on the instructed torque command value and the second torque control being a control to change the output torque of the motor from the instructed torque command value to the stop torque command value along the torque waveform progressively ;
a stopping failsafe control unit (17) that determines whether an abnormality has occurred in the motor based on a comparison of the output torque of the motor when the second torque control is executed and a predetermined abnormality determination value, and when determining that the abnormality has occurred, executes a first failsafe control of the motor.

2. The control system for the mobile object according to claim 1, wherein,

the abnormality determination value includes an upper limit determination value that defines the upper limit of a convergence value of the motor's output torque, and
the stopping failsafe control unit determines that an abnormality has occurred in the motor based on the convergence value of the motor's output torque exceeding the upper limit determination value.

3. The control system for the mobile object according to claim 1, wherein,

the abnormality determination value includes a lower limit determination value that defines the lower limit of a convergence value of the output torque of the motor, and
the stopping failsafe control unit determines that an abnormality has occurred in the motor based on the convergence value of the output torque of the motor being less than the lower limit determination value.

4. The control system for the mobile object according to claim 1, wherein,
the stopping failsafe control unit prohibits the second torque control or prohibits the control of the motor as the first failsafe control.

5. The control system for the mobile object according to claim 1, wherein,
the stopping failsafe control unit counts the number of times that an abnormality is determined to have occurred in the motor and executes the first failsafe control based on the number of times exceeding a predetermined threshold value.

6. The control system for the mobile object according to claim 1, further comprising:

a motor control unit (10) that controls the motor;
a brake control unit (20) that controls a brake device of the mobile object;
wherein,
the motor control unit comprises: the first torque command value setting unit; the second torque command value setting unit; the waveform setting unit, the motion control unit, and the stopping failsafe control unit, and

the brake control unit comprises:

a regenerative torque calculation unit (21) that calculates a regenerative torque command value, which is a command value of regenerative torque to be output from the motor; and
a driving failsafe control unit (23) that determines, when a traveling speed of the mobile object exceeds a predetermined speed, whether an abnormality has occurred in the motor by comparing an actual output torque of the motor with the regenerative torque command value and executes a second failsafe control based on the determination that the abnormality has occurred in the motor.

7. The control system for the mobile object according to claim 1, further comprising:

a gradient estimation unit (16) that calculates an estimated value of the gradient of the road surface on which the mobile object stops, and
wherein the stopping failsafe control unit sets the abnormality determination value variably based on the estimated value of the gradient of the road surface.

8. The control system for the mobile object according to claim 7, further comprising:

a motor control unit (10) that controls the motor; and
a brake control unit (20) that controls a brake device of the mobile object, wherein,
the gradient estimation unit calculates the estimated value of the gradient of the road surface based on a calculated gradient of the road surface calculated by the motor control unit and a calculated gradient of the road surface calculated by the brake control unit.

9. A program causing at least one processing unit (10) to:

set an instructed torque command value, which is a target value of torque to be output from the motor based on a driver's operation on the mobile object;
set a stop torque command value, which is a target value of the torque to be output from the motor to maintain the stopped state of the mobile object when the mobile object has been stopped;
set a torque waveform defining a time variation of a target value of an output torque of the motor;
execute a first torque control when a travelling speed of the mobile object exceeds a predetermined speed and executes a second torque control when the traveling speed of the mobile object is equal to or below the predetermined speed, the first torque control being controlling the output torque of the motor based on the instructed torque command value and the second torque control being a control to change the output torque of the motor from the instructed torque command value to the stop torque command value along the torque waveform progressively;

determine whether an abnormality has occurred in the motor based on a comparison of the output torque of the motor when the second torque control is executed and a predetermined abnormality determination value, and when determining that the abnormality has occurred, execute a first failsafe control of the motor.

# FIG.1

**FIG.2**

EP 4 474 196 A1

# FIG.3

(A)

VEHICLE SPEED

V0

t10        t12        TIME

(B)

OUTPUT TORQUE

0

t10        t12        TIME

$T_r1$

# FIG.4

# FIG.5

```
        ┌─────────────┐
        │    START    │
        └─────────────┘
               │
               ▼          S10
        ╱─────────────╲
       ╱ REGENERATIVE  ╲    NO
      ╱  REQUEST IS     ╲───────┐
      ╲  TRANSMITTED ?  ╱       │
       ╲───────────────╱        │
               │ YES            │
               ▼                │
  ┌──────────────────────────┐  │
  │ SET STOP TORQUE COMMAND  │──┼─ S11
  │          VALUE           │  │
  └──────────────────────────┘  │
               │                │
               ▼                │
  ┌──────────────────────────┐  │
  │ SET INSTRUCTED TORQUE    │──┼─ S12
  │      COMMAND VALUE       │  │
  └──────────────────────────┘  │
               │                │
               ▼                │
  ┌──────────────────────────┐  │
  │ SET ROTATION SPEED       │──┼─ S13
  │   DETERMINATION VALUE    │  │
  └──────────────────────────┘  │
               │                │
               ▼                │
        ┌─────────────┐         │
        │     END     │         │
        └─────────────┘         │
```

# FIG.6

```
                    ┌──────────────┐
                    │    START     │
                    └──────┬───────┘
                           │
                           ▼           S20
                  ╱─────────────────╲           NO
                 ╱    ω ≤ ωₛ          ╲───────────────────────┐
                 ╲                    ╱                        │
                  ╲─────────┬────────╱                        │
                           YES                                │
                           │                                  │
                           ▼           S21                    │
                  ┌──────────────────────┐                    │
                  │  SET TORQUE WAVEFORM  │                    │
                  └──────────┬───────────┘                    │
                           │                                  │
                           ▼           S22                    │
                  ╱─────────────────╲           NO            │
                 ╱     V = 0 ?        ╲──────────┐            │
                 ╲                    ╱           │            │
                  ╲─────────┬────────╱            │            │
                           YES                    │            │
                           │                      │            │
                           ▼           S23        │            │
                  ┌──────────────────────┐        │            │
                  │ CORRECT TORQUE WAVEFORM│       │            │
                  └──────────┬───────────┘        │            │
                           │◄─────────────────────┘            │
                           │                                   │
                           ▼      S24                    S25   │
    ┌──────────────────────────────┐   ┌──────────────────────────────┐
    │ EXECUTE SECOND TORQUE CONTROL│   │ EXECUTE FIRST TORQUE CONTROL ◄┘
    └──────────┬───────────────────┘   └──────────────┬───────────────┘
               │◄──────────────────────────────────────┘
               ▼
        ┌──────────────┐
        │     END      │
        └──────────────┘
```

# FIG.7

```
                    ┌─────────────┐
                    │    START    │
                    └──────┬──────┘
                           │         ⌐S30
                    ┌──────▼──────┐
                    │ CALCULATE Tup│
                    └──────┬──────┘
                           │         ⌐S31
        NO            ◇────▼────◇
  ┌──────────────────│  V ≤ Vth ? │
  │                   ◇────┬────◇
  │                        │ YES
  │  ⌐S32                  │         ⌐S33
┌─▼──────────┐        ◇────▼────◇      YES
│   Cf = 0   │        │ Tup +β < Tmc ?│─────┐
└─┬──────────┘        ◇────┬────◇           │
  │                        │ NO             │ ⌐S34
  │                        │          ┌─────▼──────┐
  │                        │          │ Cf = Cf + 1│
  │                        │          └─────┬──────┘
  │                        │                │
  │            YES    ◇────▼────◇           │  ⌐S35
  │         ┌─────────│ Tmc < Tup − β ?│────┘
  │         │          ◇────┬────◇
  │         │               │ NO
  │    ⌐S36 │               │  ⌐S37
  │  ┌──────▼──────┐   ┌─────▼──────┐
  │  │ Cf = Cf + 1 │   │   Cf = 0   │
  │  └──────┬──────┘   └─────┬──────┘
  │         │                │
  │         └────────────────┤
  │                          │  ⌐S38
  │                     ◇────▼────◇    YES
  │                     │  Ca < Cf ? │──────┐
  │                     ◇────┬────◇         │
  │                          │ NO           │  ⌐S39
  │                          │        ┌─────▼──────────┐
  │                          │        │    EXECUTE      │
  │                          │        │ FAILSAFE CONTROL│
  │                          │        └─────┬──────────┘
  │                          │              │
  └──────────────────────────┤◄─────────────┘
                           ┌──▼──┐
                           │ END │
                           └─────┘
```

# FIG.8

# FIG.9

(A)

VEHICLE
SPEED

$V_{th}$

0

t20    t21

(B)

BRAKE
PEDAL

0

t20    t21

(C)

OUTPUT
TORQUE $T_m$

$T_{up}+\beta$

$T_{mc}$

$T_{up}-\beta$

0

t20

t21

t22

$T_r1$

# INTERNATIONAL SEARCH REPORT

International application No.

**PCT/JP2022/044806**

## A. CLASSIFICATION OF SUBJECT MATTER

***B60L 3/04***(2006.01)i; ***B60L 7/14***(2006.01)i; ***B60L 15/20***(2006.01)i
FI:   B60L3/04 D; B60L7/14; B60L15/20 J

According to International Patent Classification (IPC) or to both national classification and IPC

## B. FIELDS SEARCHED

Minimum documentation searched (classification system followed by classification symbols)

B60L3/04; B60L7/14; B60L15/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2013-158178 A (NISSAN MOTOR CO., LTD.) 15 August 2013 (2013-08-15) paragraphs [0014]-[0016], [0025]-[0081], [0086], [0086], fig. 1, 2, 7-11, 14 | 1-9 |
| Y | JP 2019-110723 A (DENSO CORP.) 04 July 2019 (2019-07-04) paragraphs [0026]-[0029], [0035]-[0037], [0065]-[0067], fig. 1, 2 | 1-9 |
| Y | JP 2020-014327 A (DENSO CORP.) 23 January 2020 (2020-01-23) paragraphs [0013], [0019], [0026]-[0030], fig. 1, 2, 6 | 5-8 |
| Y | JP 2010-253985 A (HONDA MOTOR CO., LTD.) 11 November 2010 (2010-11-11) paragraphs [0017], [0020]-[0022], [0030]-[0036], fig. 1 | 8 |
| A | JP 2013-158221 A (HITACHI AUTOMOTIVE SYSTEMS, LTD.) 15 August 2013 (2013-08-15) paragraphs [0013]-[0015], [0025]-[0027], [0040], [0041], fig. 1, 7 | 1-9 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/044806**

| Patent document cited in search report | | | Publication date (day/month/year) | Patent family member(s) | | | Publication date (day/month/year) |
|---|---|---|---|---|---|---|---|
| JP | 2013-158178 | A | 15 August 2013 | US | 2014/0379190 | A1 | |
| | | | | paragraphs [0034]-[0037], [0046]-[0135], [0149]-[0156], fig. 1, 2, 7-11, 14 | | | |
| | | | | WO | 2013/115042 | A1 | |
| | | | | EP | 2810811 | A1 | |
| | | | | CN | 104066613 | A | |
| JP | 2019-110723 | A | 04 July 2019 | US | 2019/0190423 | A1 | |
| | | | | paragraphs [0018]-[0022], [0029]-[0033], [0068]-[0070], fig. 1, 2 | | | |
| JP | 2020-014327 | A | 23 January 2020 | (Family: none) | | | |
| JP | 2010-253985 | A | 11 November 2010 | US | 2010/0268416 | A1 | |
| | | | | paragraphs [0037], [0046]-[0050], [0062]-[0069], fig. 1 | | | |
| JP | 2013-158221 | A | 15 August 2013 | (Family: none) | | | |

Form PCT/ISA/210 (patent family annex) (January 2015)

**EP 4 474 196 A1**

**Patent documents cited in the description**

- JP 2022013304 A

- JP 2013158178 A